# EUROPEAN PATENT APPLICATION

(11) **EP 3 239 925 A1**
(43) Date of publication of application: **01.11.2017**
(21) Application number: 14875888.1
(22) Date of filing: 10.12.2014
(51) Int. Cl.: G06T 7/00

(54) **FISH TYPE DETERMINATION DEVICE AND FISH TYPE DETERMINATION METHOD**

(71) Applicant: Nireco Corporation, Tokyo 192-8522 (JP)
(72) Inventor: YAMASHITA, Toshihiro, Hchioji-shi Tokyo 192-8522 (JP)
(74) Representative: Gill Jennings & Every LLP
(86) International application number: PCT/JP2014/082665
(87) International publication number: WO 2016/092646

(57) **Abstract**

To provide a simply-configured fish species identification device.

A fish species identification device includes: a light source (40) that irradiates a fish body (20) conveyed on a conveyer (10) with near-infrared light and white light; a CCD camera (50) that images, in order, a monochrome image (G1) of the fish body (20) irradiated with the near-infrared light and a color image (G2) thereof irradiated with the white light; and an identification processing unit (60) that, by obtaining a feature quantity of an outline of the fish body (20) from a monochrome fish body image (20A) within the monochrome image (G1) and a feature quantity of a color pattern thereof from a color fish body image (20B) within the color image (G2) that are obtained through imaging by the CCD camera (50) and by checking these feature quantities with a feature quantity of a plurality of registered fish bodies, identifies the feature quantity of which registered fish body is the closest to the feature quantity of the fish body (20).

## Description

### Technical Field

The present invention relates to a fish species identification device and a fish species identification method for identification a fish species.

### Background Art

In conventional fish species screening, a person looks at a fish body and identifies a fish species thereof, and classifies it into the fish species according to an identification result. In a fish market, for example, the fish species screening is performed manually within a limited time from landing to auction; however, since the fish species screening takes time, screening work is not completed within a desired time in some cases. Also, since the fish body is touched with a person's hands, there has been pointed out a problem in terms of freshness deterioration and hygiene.

Therefore, an automated fish species identification processing device has been proposed as a device for identifying a species of the fish body (see, for example, Patent Literature 1). The fish species identification processing device is provided with a reflected light imaging mechanism and a transmitted light imagingmechanism, and it performs fish species identification first by recognizing a surface pattern and a pectoral fin shape of the fish body by the reflected light imaging mechanism and then by detecting a shape of the fish body by the transmitted light imaging mechanism.

The fish body, which is placed on a conveyer, is conveyed to the reflected light imaging mechanism and to the transmitted light imaging mechanism in order. When an ordinary conveyer that is black or the like is used as the conveyer, there is hardly any difference in luminance contrast between the conveyer and the fish body placed thereon, whereby it is not possible to accurately extract an outline of the fish body.

Therefore, by using a transparent conveyer having a net-like body or a transparent body as the conveyer, by radiating irradiation light from the transmitted light imaging mechanism from beneath the conveyer through a linear light filter, and by imaging the fish body on the conveyer using the transmitted light imaging device placed above the conveyer, it is possible to obtain a clear outline of the fish body.

### Citation List

### Patent Literature

Patent Literature 1: JP 10-111922 A

### Summary of Invention

### Technical Problem

In the above-described fish species identification processing device, however, the linear light filter is specially required. The transparent conveyer is also required, whereby a special measure for removing dirt due to the fish body is necessary. Furthermore, in the transmitted light imaging mechanism, it is necessary to radiate the irradiation light from beneath the conveyer, whereby there is a problem in that an irradiation mechanismbecomes complicated. Still furthermore, since the outline of the fish body is obtained in a light-transmitted form, bleeding of the light occurs in an outline portion, which may have an influence on determination of a shape and a size of the fish body.

An objective of the present invention is to provide a simply-configured fish species identification device and a fish species identification method capable of solving various problems described above.

### Solution to Problem

To achieve the above objective, a fish species identification device of the invention according to claim 1 includes: a conveying means configured to convey a fish body in a fixed direction; a first irradiation means configured to irradiate the fish body with monochromatic light during conveying by the conveying means; a second irradiation means configured to irradiate the fish body with white light during the conveying by the conveying means in timing different from irradiation with the monochromatic light by the first irradiation means; a first imaging means configured to image a monochrome image including the fish body irradiated with the monochromatic light; a second imaging means configured to image a color image including the fish body irradiated with the white light; a feature quantity extraction means configured to extract a feature quantity of the fish body, by obtaining an outline of the fish body from a monochrome fish body image within the monochrome image and by detecting a measurement region of a color fish body image within the color image based on the outline that has been obtained, from a color pattern of the color fish body image within the outline and the measurement region; and a checking means configured to identify, by checking the feature quantity of the fish body that has been obtained by the feature quantity extraction means with a feature quantity of one or more than one registered fish body registered in advance, the feature quantity of which registered fish body is the closest to the feature quantity of the fish body.

The invention of claim 2 is the fish species identification device according to claim 1, wherein the monochromatic light is a near-infrared light.

The invention of claim 3 is the fish species identification device according to claim 1 or 2, wherein the feature quantity extraction means performs processing of detecting the measurement region of the color fish body image by overlapping the color fish body image on the monochrome fish body image.

The invention of claim 4 is the fish species identification device according to claim 3, wherein the first imaging means and the second imaging means are constituted of a common imaging means, and the feature quantity extraction means performs the processing of detecting the measurement region of the color fish body image by shifting the color fish body image according to a time difference between imaging timing of the first imaging means and imaging timing of the second imaging means and by overlapping the color fish body image on the monochrome fish body image.

The invention of claim 5 is the fish species identification device according to claim 3, wherein the first imaging means and the second imaging means are arranged side by side in a conveyance direction of the conveying means, a time difference between imaging timing of the first imaging means and imaging timing of the second imagingmeans is set according to a conveyance speed of the conveying means, and the feature quantity extraction means performs the processing of detecting the measurement region of the color fish body image by overlapping the color fish body image directly on the monochrome fish body image.

A fish species identification method of the invention according to claim 6 includes: conveying a fish body in a fixed direction; imaging a monochrome image including the fish body by irradiating the fish body with monochromatic light during the conveying; imaging a color image including the fish body by irradiating the fish body with white light during the conveying in timing different from irradiation with the monochromatic light; obtaining an outline of the fish body from a monochrome fish body image within the monochrome image; detecting a measurement region of a color fish body image within the color image based on the outline of the fish body; extracting a feature quantity of the fish body from a color pattern of the color fish body image within the outline and the measurement region; and by checking the feature quantity of the fish body that has been extracted with a feature quantity of one or more than one registered fish body registered in advance, identifying the feature quantity of which registered fish body is the closest to the feature quantity of the fish body.

The invention of claim 7 is the fish species identification method according to claim 6, wherein the monochromatic light ray is a near-infrared light.

The invention of claim 8 is the fish species identification method according to claim 6 or claim 7, wherein detecting of the measurement region of the color fish body image is performed by overlapping the color fish body image on the monochrome fish body image.

The invention of claim 9 is the fish species identification method according to claim 8, wherein the monochrome image and the color image are obtained by one imaging means, and detecting of the measurement region of the color fish body image is performed by shifting the color fish body image according to a time difference between imaging timing of the monochrome image and imaging timing of the color image and by overlapping the color fish body image on the monochrome fish body image.

The invention of claim 10 is the fish species identification method according to claim 8, wherein the monochrome image and the color image are obtained at a different position in the conveyance direction, a time difference between imaging timing of the monochrome image and imaging timing of the color image is set according to the conveyance speed, and detecting of the measurement region of the color fish body image is performed by overlapping the color fish body image directly on the monochrome fish body image.

### Advantageous Effects of Invention

According to the present invention, it is not necessary to prepare a linear light filter. Also, a conveyer of any color not limited to a transparent one may be used as a conveying means, and a special measure for removing dirt due to the fish body is not necessary. Furthermore, since light can be radiated from above the conveying means, it is possible to simplify a configuration of an irradiation means compared to where the light is radiated frombeneath the conveyer. Still furthermore, since the outline of the fish body is obtained from a monochrome fish body image within a monochrome image of the fish body that is irradiated with monochromatic light, bleeding of the light does not occur to the outline thereof, whereby it is possible to obtain an accurate outline.

### Brief Description of Drawings

Fig. 1 is an explanatory diagram illustrating an overall configuration of a fish species identification device of a first embodiment of the present invention.
Fig. 2 is a function block diagram illustrating an identification processing unit of the first embodiment.
Fig. 3 is a timing chart illustrating operation of the first embodiment.
Fig. 4 is a flowchart illustrating processing of the first embodiment.
Figs. 5(a) and 5(b) are explanatory diagrams illustrating overlapping processing of a first monochrome image and a second color image of the first embodiment.
Figs. 6(a) and 6(b) are explanatory diagrams illustrating outline extraction of a fish body of the first embodiment.
Fig. 7 is an explanatory table illustrating a fish species code of the first embodiment.
Fig. 8 is an explanatory diagram illustrating an overall configuration of the fish species identification device of the first embodiment of the present invention.
Fig. 9 is a function block diagram illustrating an identification processing unit of a second embodiment.

### Description of Embodiments

### <First embodiment>

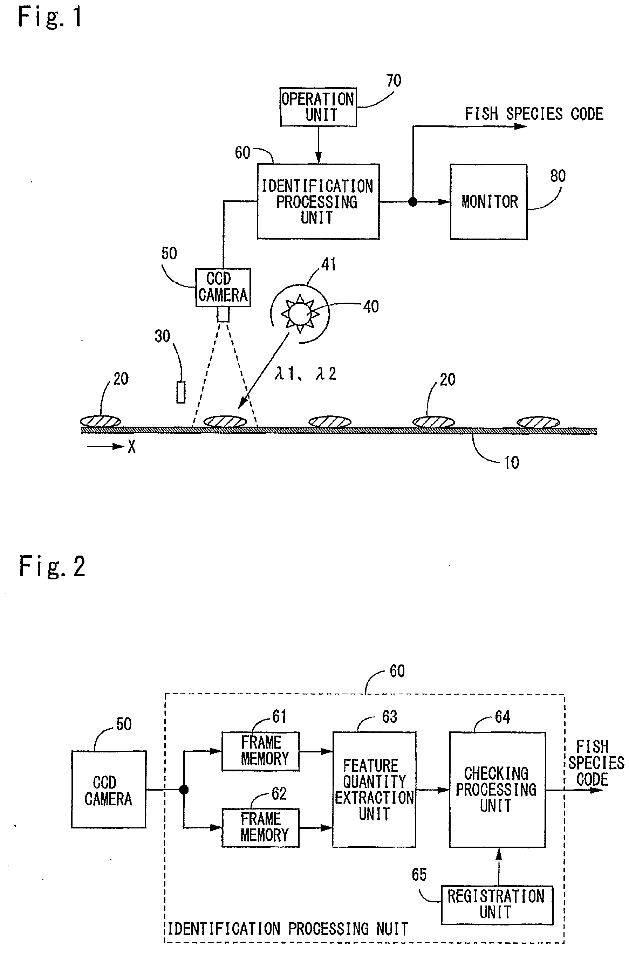

Fig. 1 is a diagram illustrating an overall configuration of a fish species identification device of a first embodiment of the present invention. A reference numeral 10 denotes a conveyer as a conveying means that conveys a fish body 20 mounted discretely in an arbitrary posture thereon in an X direction marked with an arrow. A transparent conveyer as well as a conveyer of an arbitrary color may be used as the conveyer 10. A reference numeral 30 denotes a sensor that detects a leading end in a conveyance direction of the fish body 20 conveyed on the conveyer 10, and for example, an optical sensor may be used.

A reference numeral 40 denotes a light source as an irradiation means that irradiates a surface of the conveyer 10 with a near-infrared light λ1 (single wave or multiple waves having a wavelength substantially from 700 nm to 1000 nm) and with a white light λ2 (light containing most of visible light and having a wavelength substantially from 400 nm to 700 nm), and for example, a configuration may be employed in which a ring-arranged LED lamp for radiating the near-infrared light and a ring-arranged LED lamp for radiating the white light are concentrically combined and a reflecting plate 41 is provided on a backside thereof.

A reference numeral 50 denotes a CCD camera as an imaging means that images the fish body 20, which is on the conveyer 10 and is irradiated by the light source 40. The CCD camera having sensitivity capable of imaging both images of wavelengths λ1 and λ2 is employed.

A reference numeral 60 denotes an identification processing unit including image processing using a computer. It performs fish species identification of the fish body 20 that has been imaged by the CCD camera 50 by capturing and processing a monochrome image of the fish body 20 by radiating the near-infrared light and a color image thereof by radiating the white light.

A reference numeral 70 denotes an operation unit constituted of a keyboard, a mouse, and the like for inputting an instruction of processing details and the like to the identification processing unit 60. A reference numeral 80 denotes a monitor for displaying an operational instruction by the operation unit 70, an identification result by the identification processing unit 60, and the like.

In Fig. 2, a function block of the identification processing unit 60 is illustrated. A reference numeral 61 denotes a first frame memory for storing data of the image imaged by the CCD camera 50 by radiating the near-infrared light (hereinafter, referred to as a "monochrome image G1"). A reference numeral 62 denotes a second frame memory for storing data of the image imaged by the CCD camera 50 by radiating the white light (hereinafter, referred to as a "color image G2").

A reference numeral 63 denotes a feature quantity extraction unit that extracts a feature quantity of the fish body 20 by extracting an outline of the fish body 20 from the data of the monochrome image G1 read from the first frame memory 61 and by extracting hue of the fish body 20 from the data of the color image G2 read from the second frame memory 62.

A reference numeral 64 denotes a checking processing unit. By comparing and checking the feature quantity of the fish body 20, which has been detected by the feature quantity extraction unit 63, with a feature quantity of each of a plurality of registered fish bodies registered in a registration unit 65, it identifies a registered fish body having the highest matching degree therewith among the feature quantities of the registered fishbodies. From the checking processing unit 64, afishspecies code indicating the registered fish body that has been identified through this checking is output.

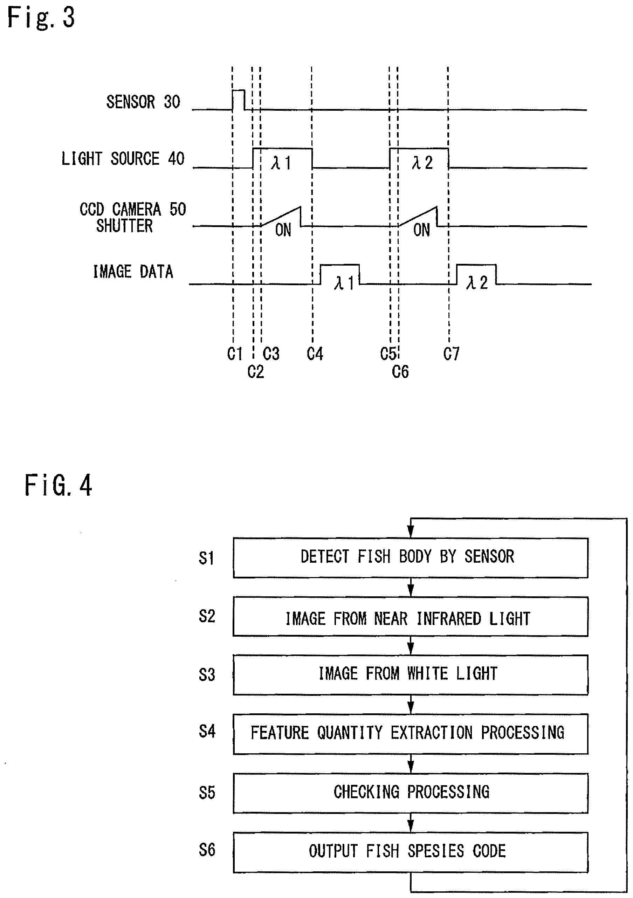

In Fig. 3, a time chart of operation is illustrated. A conveyance distance of the conveyer 10, which conveys the fish body 20 at a constant speed, is managed by an encoder (not illustrated). When the fish body 20, which has been conveyed in the X direction by the conveyer 10, is detected by the sensor 30 at the time when a count value of the encoder is C1, the light source 40 irradiates the fish body 20 on the conveyer 10 with the near-infrared light λ1 at the time when the count value advances to C2 from the time of detection. Furthermore, when the count value of the encoder becomes C3, the CCD camera 50 opens a shutter and images the monochrome image G1 of the fish body 20. When the count value of the encoder becomes C4, irradiation with the near-infrared light λ1 by the light source 23 is ended.

Subsequently, when the count value of the encoder becomes C5, the light source 40 irradiates the same fish body 20 on the conveyer 10 with the white light λ2. Then, when the count value of the encoder becomes C6, the CCD camera 40 opens the shutter and images the color image G2 of the fish body 20. When the count value of the encoder becomes C7, irradiation with the white light λ2 by the light source 40 is ended.

In Fig. 4, a flowchart of identification processing is illustrated. The forefront of the fish body 20 conveyed in the X direction by the conveyer 10 is detected at the time of the count value C1 of the encoder (step S1). Subsequently, at the count value C2, the fish body 20 is irradiated with the near-infrared light having the wavelength λ1 from the light source 40, and at the count value C3 after irradiation with the near-infrared light, the monochrome image G1 of the fish body 20 is imaged by the CCD camera 50 (step S2). The irradiation with the near-infrared light having the wavelength λ1 by the light source 40 is ended at the count value C4. Then, the data of the monochrome image G1 by the near-infrared light is stored in the first frame memory 61 of the identification processing unit 60.

When the count value of the encoder becomes C5, the fish body 20 is irradiated with the white light having the wavelength λ2 from the light source 40 this time, and at the count value C6 after irradiation with the white light, the color image G2 of the fish body 20 is imaged by the CCD camera 50 (step S3). The irradiation with the white light having the wavelength λ2 by the light source 40 is ended at the count value C7. Then, the data of the color image G2 by the white light is stored in the second frame memory 62 of the identification processing unit 60.

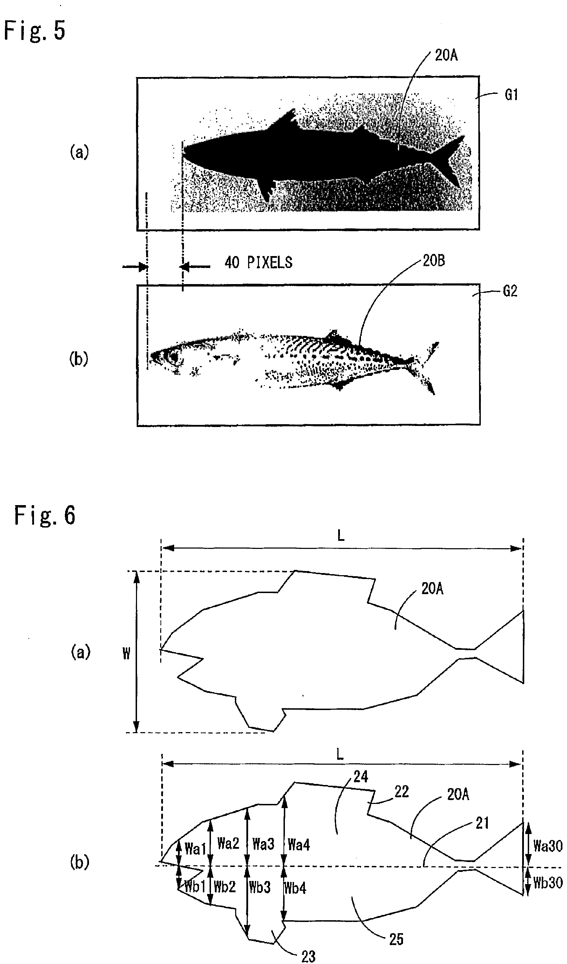

The monochrome image G1 stored in the first frame memory 61 becomes an image including a monochrome fish body image 20A such as of black and white as illustrated in Fig. 5(a), for example. The color image G2 stored in the second frame memory 62 becomes an image including a color fish body image 20B having RGB densities (although colors are omitted here) as illustrated in Fig. 5 (b), for example, and the outline of the color fish body image 20B may become unclear in some cases.

Therefore, in this embodiment, in feature quantity extraction processing (step S4), a measurement region of the color fish body image 20B is detected for extracting the feature quantity of the fish body 20 by overlapping the color fish body image 20B within the second color image G2 on the monochrome fish body image 20A within the first monochrome image G1 illustrated in Fig. 5(a).

Here, for example, in a case where 20 msec of time is necessary from the count value C3 at which imaging of the first monochrome image G1 is started to the count value C5 at which imaging of the second color image G2 is started, when a conveyance speed of the conveyer 10 is 60 m/min, the color fish body image 20B within the second color image G2 is an image that is moved 20 mm in the conveyance direction from the monochrome fish body image 20A within the first monochrome image G1. Then, when an angle of view of both of the images 20A and 20B is 320 mm in the X direction of conveyance and the number of horizontal pixels in one screen is 640 pixels, one pixel is equivalent to 0.5 mm. Thus, a moving distance of 20 mm is equivalent to 40 pixels when converted into the number of pixels.

As above, when the second color fish body image 20B is read from the second frame memory 62 for overlapping the second color fish body image 20B on the first monochrome fish body image 20A, a starting point of reading in a horizontal direction thereof is set to a point of a pixel that is shifted by 40 pixels (-40 pixels) from a starting point of reading in the horizontal direction of the first frame memory 61 of the first monochrome fish body image 20A. Accordingly, by overlapping the images read from the first frame memory 61 and the second frame memory 62 in the same timing, the second color fish body image 20B is accurately overlapped on the first monochrome fish body image 20A of the fish body 20, whereby the measurement region of the color fish body image 20B is specified.

Next, the feature quantity of the fish body 20 is extracted after the measurement region of the color fish body image 20B has been specified as described above. This processing is performed through shape extraction of the outline and hue extraction of the color image. As illustrated in Fig. 6(a), the shape extraction is performed based on a ratio W/L of a length L and a width W of the outline of the monochrome fish body image 20A. For example, when the ratio W/L is smaller than a predetermined value, it may be determined as a narrow fish such as a saury, and when it is larger, it may be determined as a broad fish such as a mackerel.

As illustrated in Fig. 6(b), it is also possible to determine whether it is the narrow fish or the broad fish by obtaining a center line 21 from a head to a tail in the monochrome fish body image 20A, by dividing the line 21 into 30, and by measuring widths Wa1 to Wa30 from the line 21 to an edge on a side of a dorsal fin 22 for each of divided regions as well as measuring widths Wb1 to Wb30 from the line 21 to an edge on a side of a pectoral fin 23.

In the hue extraction, by using the color fish body image 20B within the measurement region that is specified by the outline of the monochrome fish body image 20A, an area of hue of an individual part is measured, or an area of a pattern of a specific part is measured. The feature quantity of the fish body 20 is extracted as described above.

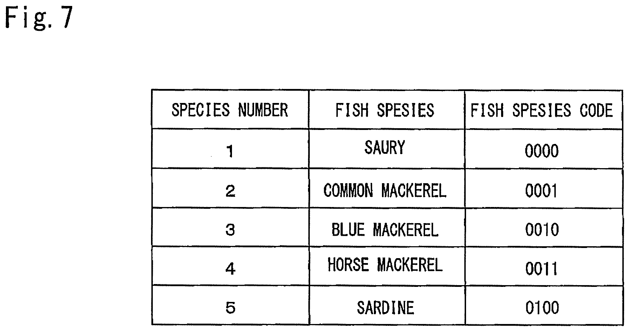

After the feature quantity of the fish body 20 has been extracted, checking processing is performed with the feature quantity of each of the plurality of registered fish bodies registered to the registration unit 65 in advance (step S5). In the checking processing, when the matching degree of the feature quantity of the fish body 20 with the feature quantity of a registered fish body exceeds a threshold set in advance, the fish body 20 is assumed to be the registered fish body and obtains the fish species code of the registered fish body (step S6). The fish species code is allocated to a variety of fishes as illustrated in Fig. 7, for example.

When the fish species code is obtained as described above, a fish species to which the fish species code has been allocated is displayed on the monitor 80, and the fish species code is output to the outside.

In a case where a classification device is installed downstream of the conveyer 10, by transmitting the fish species code to the classification device, the fish body, which has already been identified its fish species and is conveyed by the conveyer 10, can be classified into the fish species and be sorted into each bucket by the classification device.

Here, details of the feature quantity extraction processing (step S4) and the checking processing (S5) in a case where a known mackerel is used as the fish body 20 are described with reference to Figs. 6 (a) and 6(b). In this case, using the monochrome fish body image 20A of the fish body 20, the monochrome fish body image 20A is divided into 30 in a lengthwise direction from a head to a tail, a length in a width direction of the monochrome fish body image 20A is measured for each of the divided regions, and a pixel position of a midpoint of the length in the width direction is specified. Then, the midpoint obtained in each of the divided regions is connected with each other from one end to the other end, and by smoothing a connected line, the substantially linear line 21 is obtained. Subsequently, an upper side region 24 of the line 21 and a lower side region 25 thereof are specified, and each of areas of the upper side region 24 and the lower side region 25 is measured. Based on this measurement result, a side with a larger area is considered to be a dorsal side region and a side with a smaller area is considered to be an abdominal side region.

Next, using the color fish body image 20B of which the measurement region has been specified within the color image G2, hue on the dorsal side region of the fish body 20 is obtained. It is compared with an area ratio of hue on a dorsal side of a mackerel registered to the registration unit 65 in advance as well as an area ratio of an entire area on the dorsal side.

In this comparison, when a predetermined threshold is exceeded for an area ratio of a part having high density in a patterned portion of the dorsal side region of the color fish body image 20B, a matching ratio of each of color areas that are decomposed into RGB, and the like, it is determined as the mackerel.

Next, for the abdominal side region of the color fish body image 20B, hue and an area are obtained and are compared with hue and an area registered to the registration unit 65 in advance. In this comparison, it is determined as a blue mackerel when the hue is the registered hue and the area is equal to or greater than the registered area. Even though the hue is the registered hue, when the area is equal to or less than the registered area, it is determined as a common mackerel.

By conveying the fish body 20 of a known fish species as a test by the conveyer 10, it is preferred that a feature quantity of the fish species obtained by the feature quantity extraction unit 63 be registered to the registration unit 65 (studying and registering). In screening in which a fish body is identified and classified, in general, the fish body 20 of the known fish species is a target, whereby by conveying the fish body 20 on the conveyer 10 for performing identification operation and by registering the fish species to the registration unit 65 in advance, it is possible to perform the fish species identification with high probability.

### <Second embodiment>

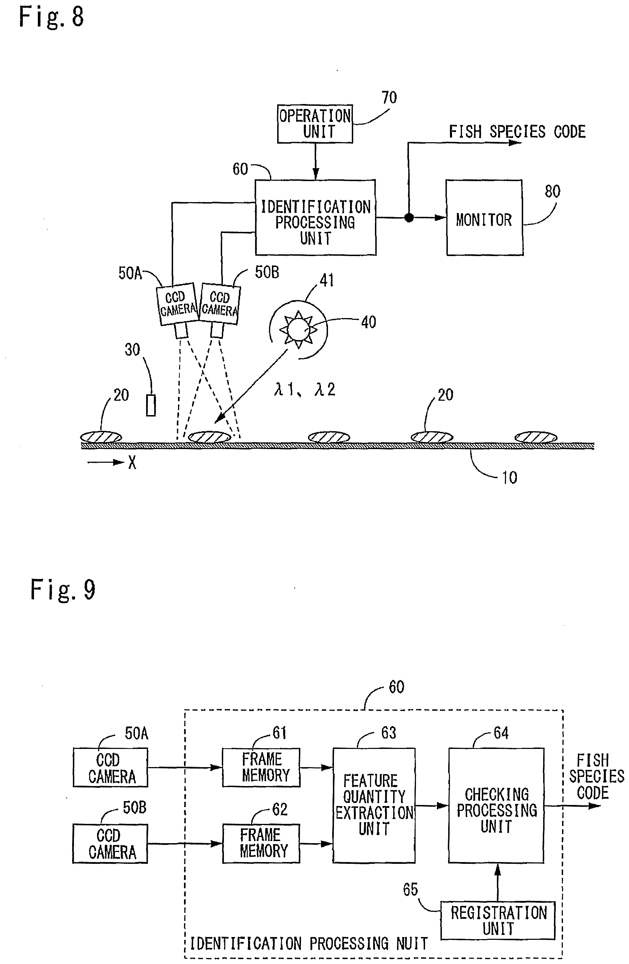

Fig. 8 is a diagram illustrating an overall configuration of a fish species identification device of a second embodiment of the present invention. In this embodiment, as an imaging means, two CCD cameras 50A and 50B arranged along a conveyance direction X of a conveyer 10 are used. A monochrome image is imaged by the CCD camera 50A with a near-infrared light λ1, and a color image is imaged by the CCD camera 50B with a white light λ2.

Therefore, the CCD camera 50A may have sensitivity to the near-infrared light λ1 only, and the CCD camera 50B may have the sensitivity to the white light λ2 only, whereby it is possible to use cameras optimal for the CCD cameras 50A and 50B.

Also, by switching between irradiation with the near-infrared light λ1 and irradiation with the white light λ2 from a light source 40 at a high speed, it is possible to reduce time from capturing of the monochrome image imaged by the CCD camera 50A to capturing of the color image imaged by the CCD camera 50B, whereby it is possible to accelerate processing of a feature quantity extraction unit 63 of an identification processing unit 60 and to output a fish species code rapidly.

By setting imaging timing of two CCD camera 50A and CCD camera 50B arranged along the conveyance direction X of the conveyer 10 according to a conveyance speed of the conveyer 10, it is possible to coincide a leading end of a monochrome fish body image 20A with a leading end of a color fish body image 20B at the time of imaging, which eliminates the need for special processing for overlapping the color fish body image 20B on the monochrome fish body image 20A as in the above-described first embodiment.

That is, in the first embodiment, 20 msec of time is necessary from imaging of the first monochrome fish body image 20A to imaging of the second color fish body image 20B, whereby it is necessary to read the second color fish body image 20B from a second frame memory 62 by shifting pixels equivalent to a moving distance during the time (40 pixels), or 20 mm, for overlapping the second color fish body image 20B on the first monochrome fish body image 20A.

In contrast, in this embodiment, by delaying the imaging timing of the CCD camera 50B by 20 msec, or the time for a conveyance amount of 20 mm in the conveyance direction X, from the imaging timing of the CCD camera 50A, the monochrome fish body image 20A written in a frame memory 61 and the color fish body image 20B written in the frame 62 are read and overlapped on each other in the same timing, whereby specification of a measurement region becomes possible in feature quantity extraction processing of step S4 in Fig. 4.

### <Other embodiments>

Note that in a case where two CCD cameras 50A and 50B are used as an imaging means, it is also possible to separate a light source 40 into a light source for irradiation with near-infrared light λ1 for the CCD camera 50A and a light source for irradiation with white light λ2 for the CCD camera 50B. Also, in the first and second embodiments, a fish body 20 is irradiated with the near-infrared light λ1 for imaging a monochrome fish body image 20A; however, it is not limited to the near-infrared light λ1, and it may also be an infrared light or another monochromatic light (light having a single wavelength or light having a plurality of approximating wavelengths). As a conveyer 10, a color pattern thereof is not particularly limited as long as it is an ordinary conveyer.

### Reference Signs List

10: conveyer
20: fish body, 21: center line, 22: dorsal fin, 23: pectoral fin, 24: dorsal side region, 25: abdominal side region
20A: monochrome fish body image, 20B: color fish body image
30: sensor
40: light source, 41: reflecting plate
50, 50A, 50B: CCD camera
60: identification processing unit, 61, 62: frame memory, 63: feature quantity extraction unit, 64: checking processing unit,
65: registration unit
70: operation unit
80: monitor
G1: monochrome image, G2: color image

## Claims

1. A fish species identification device comprising:
a conveying means configured to convey a fish body in a fixed direction;
a first irradiation means configured to irradiate the fish body with monochromatic light during conveying by the conveying means;
a second irradiation means configured to irradiate the fish body with white light during the conveying by the conveying means in timing different from irradiation with the monochromatic light by the first irradiation means;
a first imaging means configured to image a monochrome image including the fish body irradiated with the monochromatic light;
a second imaging means configured to image a color image including the fish body irradiated with the white light;
a feature quantity extraction means configured to extract a feature quantity of the fish body, by obtaining an outline of the fish body from a monochrome fish body image within the monochrome image and by detecting a measurement region of a color fish body image within the color image based on the outline that has been obtained, from a color pattern of the color fish body image within the outline and the measurement region; and
a checking means configured to identify, by checking the feature quantity of the fish body that has been obtained by the feature quantity extraction means with a feature quantity of one or more than one registered fish body registered in advance, the feature quantity of which registered fish body is the closest to the feature quantity of the fish body.

2. The fish species identification device according to claim 1, wherein
the monochromatic light is a near-infrared light.

3. The fish species identification device according to claim 1 or 2, wherein
the feature quantity extractionmeans performs processing of detecting the measurement region of the color fish body image by overlapping the color fish body image on the monochrome fish body image.

4. The fish species identification device according to claim 3, wherein
the first imaging means and the second imaging means are constituted of a common imaging means, and
the feature quantity extraction means performs the processing of detecting the measurement region of the color fish body image by shifting the color fish body image according to a time difference between imaging timing of the first imaging means and imaging timing of the second imaging means and by overlapping the color fish body image on the monochrome fish body image.

5. The fish species identification device according to claim 3, wherein
the first imaging means and the second imaging means are arranged side by side in a conveyance direction of the conveying means,
a time difference between imaging timing of the first imaging means and imaging timing of the second imaging means is set according to a conveyance speed of the conveying means, and
the feature quantity extraction means performs the processing of detecting the measurement region of the color fish body image by overlapping the color fish body image directly on the monochrome fish body image.

6. A fish species identification method comprising:
conveying a fish body in a fixed direction;
imaging a monochrome image including the fish body by irradiating the fish body with monochromatic light during the conveying;
imaging a color image including the fish body by irradiating the fish body with white light during the conveying in timing different from irradiation with the monochromatic light ray;
obtaining an outline of the fish body from a monochrome fish body image within the monochrome image;
detecting a measurement region of a color fish body image within the color image based on the outline of the fish body;
extracting a feature quantity of the fish body from a color pattern of the color fish body image within the outline and the measurement region; and
by checking the feature quantity of the fish body that has been extracted with a feature quantity of one or more than one registered fish body registered in advance, identifying the feature quantity of which registered fish body is the closest to the feature quantity of the fish body.

7. The fish species identification method according to claim 6, wherein
the monochromatic light is a near-infrared light.

8. The fish species identification method according to claim 6 or claim 7, wherein
detecting of the measurement region of the color fish body image is performed by overlapping the color fish body image on the monochrome fish body image.

9. The fish species identification method according to claim 8, wherein
the monochrome image and the color image are obtained by one imaging means, and
detecting of the measurement region of the color fish body image is performed by shifting the color fish body image according to a time difference between imaging timing of the monochrome image and imaging timing of the color image and by overlapping the color fish body image on the monochrome fish body image.

10. The fish species identification method according to claim 8, wherein
the monochrome image and the color image are obtained at a different position in the conveyance direction,
a time difference between imaging timing of the monochrome image and imaging timing of the color image is set according to the conveyance speed, and
detecting of the measurement region of the color fish body image is performed by overlapping the color fish body image directly on the monochrome fish body image.
